# EUROPÄISCHE PATENTANMELDUNG

(11) **EP 2 696 064 A2**
(43) Veröffentlichungstag der Anmeldung: **12.02.2014**
(21) Anmeldenummer: 13180144.1
(22) Anmeldetag: 12.08.2013
(51) Int. Cl.: F03B 13/06, E03B 1/02

(54) **Wasserversorgungsanlage und Verfahren zum Betreiben einer Wasserversorgungsanlage**

(30) Priorität: 10.08.2012 DE 102012107388; 12.08.2012 DE 202012103027 U
(71) Anmelder: Sixt, Klaus, 85435 Erding (DE); Heiß, Wilhelm, 84543 Winhöring (DE)
(72) Erfinder: Sixt, Klaus, 85435 Erding (DE); Heiß, Wilhelm, 84543 Winhöring (DE)
(74) Vertreter: Habermann, Hruschka & Schnabel

(57) **Zusammenfassung**

Die Erfindung betrifft eine Wasserversorgungsanlage und ein Verfahren zum Betreiben einer Wasserversorgungsanlage und ihr liegt die Aufgabe zugrunde, eine kostengünstige Möglichkeit zur Speicherung elektrischer Energie und Erzeugung elektrischer Energie zu schaffen. Diese Aufgabe wird durch eine Wasserversorgungsanlage gelöst, die die folgenden Merkmale aufweist: einen ersten Wasserspeicher (6), einen zweiten Wasserspeicher (11), der höher gelegen ist als der erste Wasserspeicher (6), ein mit dem zweiten Wasserspeicher (11) verbundenes Wasserverteilungsnetz (13), eine Pumpe (9), die so ausgebildet ist, dass sie den zweiten Wasserspeicher (11) mit Wasser speisen kann, vorzugsweise eine Turbine (17) mit Generator (19), eine Druckleitung (10) zum Fördern von aus dem ersten Wasserspeicher (6) stammendem Wasser, das von der Pumpe (9) zum zweiten Wasserspeicher (11) gefördert wird, eine Rückführleitung (16,18) zum Leiten von aus dem zweiten Wasserspeicher (11) stammendem Wasser über die Turbine (17) in den ersten Wasserspeicher (6), und ein Steuermittel (20), das so ausgebildet ist, dass es die Wasserversorgungsanlage unter Sicherstellung des in dem Wasserverteilungsnetz (13) bestehenden Wasserbedarfs so steuern kann, dass zusätzlich bedarfsabhängig eine Energiespeicherungsfunktion durch Hochpumpen von Wasser in den zweiten Wasserspeicher (11) und/oder eine Energieversorgungsfunktion durch Betreiben der Turbine (17) mit Generator (19) erfüllt wird.

## Beschreibung

Die Erfindung betrifft eine Wasserversorgungsanlage und ein Verfahren zum Betreiben einer Wasserversorgungsanlage. Insbesondere betrifft die Erfindung eine Trinkwasserversorgungsanlage und ein Verfahren zum Betreiben einer Trinkwasserversorgungsanlage.

Die Energieversorgung der Bevölkerung bereitet in jüngster Zeit viele Probleme, da die traditionellen Energieerzeugungsverfahren eine Reihe von Nachteilen aufweisen. So sind insbesondere nach der Fukushima-Katastrophe in vielen Ländern die zur Bereitstellung der Grundlast wichtigen Kernreaktoren zur Energieerzeugung aufgrund der damit verbundenen nuklearen Risiken unerwünscht. Zudem ergeben sich bei fossilen Energieträgern Bedenken hinsichtlich der Klimaverträglichkeit und langfristigen Verfügbarkeit. Daher wird in vielen Ländern und insbesondere in Deutschland bei der Energieversorgung zunehmend auf regenerative Energien wie Windkraft und Photovoltaik gesetzt. Allerdings weisen diese regenerativen Energien Nachteile hinsichtlich ihrer kontinuierlichen Verfügbarkeit auf, was an den jahres- und tageszeitlich bedingten Schwankungen der Windstärken und solaren Einstrahlung liegt. Daraus ergibt sich ein Bedarf an effizienten Verfahren zur Speicherung von elektrischer Energie, die durch regenerative Energieerzeugungsverfahren in Perioden überschüssiger Verfügbarkeit erzeugt wurde, um in Phasen geringerer Energieerzeugung der regenerativen Energiesysteme die Grundlast durch Energieabgabe aus den Speichern decken zu können.

Der vorliegenden Erfindung liegt daher die Aufgabe zugrunde, eine kostengünstige Möglichkeit zur Speicherung elektrischer Energie und Erzeugung elektrischer Energie zu schaffen.

Diese Aufgabe wird durch eine Wasserversorgungsanlage nach Anspruch 1 gelöst, die die folgenden Merkmale aufweist: einen ersten Wasserspeicher, einen zweiten Wasserspeicher, der höher gelegen ist als der erste Wasserspeicher, ein mit dem zweiten Wasserspeicher verbundenes Wasserverteilungsnetz, eine Pumpe, die so ausgebildet ist, dass sie den zweiten Wasserspeicher mit Wasser speisen kann, eine Vorrichtung zum Antreiben eines Generators, vorzugsweise eine Turbine, eine Druckleitung zum Fördern von aus dem ersten Wasserspeicher stammendem Wasser, das von der Pumpe zum zweiten Wasserspeicher gefördert wird, eine Rückführleitung zum Leiten von aus dem zweiten Wasserspeicher stammendem Wasser über die Turbine in den ersten Wasserspeicher, und ein Steuermittel, das so ausgebildet ist, dass es die Wasserversorgungsanlage unter Sicherstellung des in dem Wasserverteilungsnetz bestehenden Wasserbedarfs so steuern kann, dass zusätzlich bedarfsabhängig eine Energiespeicherungsfunktion durch Hochpumpen von Wasser in den zweiten Wasserspeicher und/oder eine Energieversorgungsfunktion durch Betreiben der Turbine mit Generator erfüllt wird.

Ferner wird die Aufgabe der Erfindung durch ein Verfahren zum Betreiben einer Wasserversorgungsanlage nach Anspruch 6 gelöst, bei dem aus einem ersten Wasserspeicher in einen gegenüber dem ersten Wasserspeicher höher gelegenen zweiten Wasserspeicher Wasser mittels einer Pumpe gefördert wird, um einen ausreichenden Wasservorrat für die Versorgung in einem Wasserverteilungsnetz zu bilden und/oder von einem Stromversorgungssystem gelieferte elektrische Energie in potentielle Energie umzuwandeln, in Abhängigkeit von dem Wasserbedarf in dem Wasserverteilungsnetz Wasser aus dem zweiten Wasserspeicher in das Wasserverteilungsnetz eingespeist wird und in Abhängigkeit von dem Strombedarf in dem Stromversorgungssystem dann, wenn dadurch die Wasserversorgung in dem Wasserverteilungsnetz nicht beeinträchtigt wird, potentielle Energie durch Ableiten von Wasser aus dem zweiten Wasserspeicher über eine Turbine mit Generator in den ersten Wasserspeicher in elektrische Energie umgewandelt wird, die in das Stromversorgungssystem geliefert wird.

Die erfindungsgemäße Lösung erweist sich insbesondere deshalb als vorteilhaft, da sie sich in bereits bestehende Wasserversorgungsanlagen, die zahlreich vorhanden sind, integrieren lässt. Dabei ist bei einer Vielzahl existierender Wasserversorgungsanlagen der zur Wasserspeicherung eingesetzte Hochbehälter aus verschiedenen Gründen überdimensioniert, so dass das Speichervolumen zusätzlich kontinuierlich zur Speicherung elektrischer Energie verwendet werden kann, mit der die Pumpe zum Hochpumpen von Trinkwasser in den Hochbehälter in Phasen betrieben werden kann, in der die Stromerzeugung insbesondere in einem System regenerativer Energieerzeugungssysteme den Strombedarf überschreitet. Die über die für die reine Trinkwasserversorgung erforderliche Dimensionierung hinausgehende Überdimensionierung vieler vorhandener Hochbehälter resultiert z.B. aus dem stetigen Rückgang des durchschnittlichen Trinkwasserverbrauchs oder dem Rückgang der Bevölkerung insbesondere in vielen ländlichen Regionen. Darüber hinaus bieten aber auch angemessen dimensionierte Hochbehälter in Phasen relativ geringen durchschnittlichen Wasserverbrauchs die Möglichkeit, einen Teil des Volumens des Hochbehälters zu Wasserspeicherzwecken zu verwenden, die nicht durch die Sicherung der Trinkwasserversorgung bedingt sind, sondern durch die Speicherung überschüssig vorhandener elektrischer Energie.

Weitere Vorteile der Erfindung ergeben sich aus der Beschreibung der Ausführungsbeispiele in Verbindung mit den beigefügten Zeichnungen. In den Zeichnungen zeigt:
- Fig. 1: eine schematische Darstellung eines Ausführungsbeispiels einer erfindungsgemäßen Wasserversorgungsanlage; und
- Fig. 2: eine schematische Darstellung eines weiteren Ausführungsbeispiels einer erfindungsgemäßen Wasserversorgungsanlage.

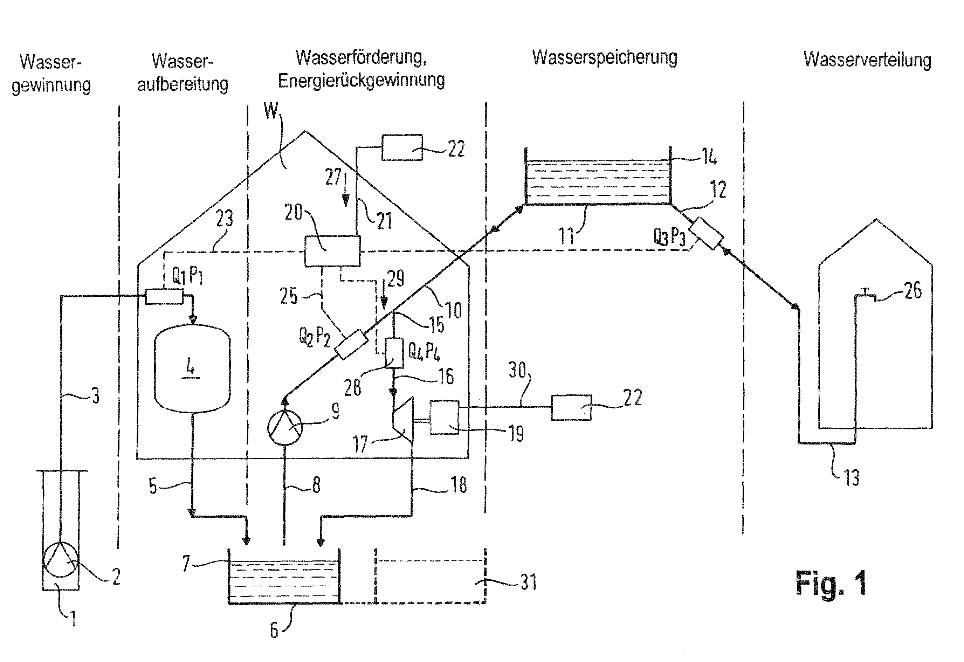

Fig. 1 zeigt ein Ausführungsbeispiel einer erfindungsgemäßen Wasserversorgungsanlage, bei der es sich um eine Trinkwasserversorgungsanlage handelt. Links in der Fig. 1 ist ein Brunnen 1 zu erkennen, aus dem über eine Förderpumpe 2 Grundwasser über eine Leitung 3 zu einer Wasseraufbereitungsanlage 4 gefördert wird. In der Wasseraufbereitungsanlage wird das Rohwasser verschiedenen physikalischen, chemischen und biologischen Verfahren ausgesetzt, um eine Trinkwasserqualität gemäß den gesetzlichen Vorgaben zu erreichen. Zu den Wasseraufbereitungsverfahren können dabei z.B. Sedimentation, Filtration, Fällung, Entsäuerung, Flockung, Enteisenung oder Ionenaustausch usw. gehören. Die Wasseraufbereitungsanlage 4 liefert über eine Leitung 5 das Wasser mit Trinkwasserqualität zu einem ersten Wasserspeicher 6, der einen bestimmten Füllstand 7 aufweist.

Der erste Wasserspeicher 6, der für den Betrieb mit Trinkwasser als Reinwasserspeicher bzw. Saugbehälter ausgebildet ist, ist über eine Leitung 8 mit einer Pumpe 9 verbunden, bei der es sich bevorzugt um eine Kreiselpumpe handelt. Die Pumpe 9 ist über die Druckleitung 10 mit einem zweiten Wasserspeicher 11 verbunden, der als Hochbehälter ausgebildet ist und höher gelegen ist als der erste Wasserspeicher 6. Die mit elektrischer Energie gespeiste Pumpe 9 ist so ausgebildet, dass sie im Betrieb den zweiten Wasserspeicher 11 mit Trinkwasser aus dem ersten Wasserspeicher 6 speisen kann.

Von dem zweiten Wasserspeicher 11 führt eine Versorgungsleitung 12 in ein Wasserverteilungsnetz 13 eines Versorgungsgebiets. Bezüglich der Trinkwasserversorgung besteht der Zweck des zweiten Wasserspeichers 11 darin, Trinkwasserverbrauchsschwankungen im Wasserverteilungsnetz 13 auszugleichen und für einen gleichmäßigen Versorgungsdruck im Wasserverteilungsnetz 13 zu sorgen. Das Speichervermögen des Wasserspeichers 11 ist dabei so gewählt, dass die Trinkwasserversorgung selbst an Tagen mit Höchstverbrauch, z.B. im Hochsommer, gewährleistet ist und darüber hinaus eine Sicherheitsreserve, z.B. für Löschwasserverwendung bei unvorhergesehenen Bränden, geboten wird.

Die Höhe des zweiten Wasserspeichers 11 ist dabei so gewählt, dass bei maximalem Füllstand 14 im zweiten Wasserspeicher 11 der auf das Wasserverteilungsnetz 13 ausgeübte Wasserdruck einen vorherbestimmten Maximaldruck nicht überschreitet, der z.B. bei 4 bis 6 bar liegen kann. Typische Werte für die Höhe des zweiten Wasserspeichers 11 liegen z.B. bei 2,5 m bis 8 m.

Von der Druckleitung 10 geht an der Abzweigung 15 die Rückführleitung 16 ab, die zu einer Turbine 17 führt und von dieser über den Leitungsteil 18 der Rückführleitung 16 zum ersten Wasserspeicher 6 führt.

Die Turbine 17, die vorzugsweise aus einer Francis-Turbine besteht, weist einen Generator 19 auf, mittels dessen während des Betriebs der Turbine 17 elektrische Energie erzeugt werden kann. Der Generator 19 ist über eine Verbindungsleitung 30 mit dem Stromversorgungssystem 22 verbunden und kann über die Verbindungsleitung 30 elektrische Energie in das Stromversorgungssystem 22 einspeisen.

Darüber hinaus weist die in Fig. 1 dargestellte Wasserversorgungsanlage ein Steuermittel 20 auf, das so ausgebildet ist, dass es die verschiedenen Elemente der Wasserversorgungsanlage steuern kann. Die genauen Funktionen sowie die Arbeitsweise des Steuermittels 20 werden anhand des nachfolgend beschriebenen Ausführungsbeispiels eines Verfahrens zum Betreiben einer Wasserversorgungsanlage beschrieben.

Das Steuermittel 20 ist über eine Verbindung 21 mit dem Stromversorgungssystem 22 verbunden, wobei über diese Verbindung 21 Steuersignale zwischen dem Stromversorgungssystem 22 und dem Steuermittel 20 ausgetauscht werden können. Bei der Verbindung 21 kann es sich auch um eine drahtlose Verbindung, z.B. eine Funkverbindung, handeln.

Das in der Fig. 1 nur schematisch dargestellte Stromversorgungssystem 22 umfasst Anlagen zur Erzeugung elektrischer Energie, z.B. konventionelle Energieerzeugungsanlagen, Windkraft- oder Photovoltaikanlagen usw., und versorgt verschiedene an das Stromversorgungssystem 22 angeschlossene beliebige Stromverbraucher, z.B. eine Kommune oder Industriebetriebe usw..

Im Folgenden wird ein Ausführungsbeispiel für ein erfindungsgemäßes Verfahren zum Betreiben einer Wasserversorgungsanlage beschrieben.

Mittels der Förderpumpe 2 wird Rohwasser aus dem Brunnen 1 über die Leitung 3 zu der Wasseraufbereitungsanlage 4 gefördert, wobei die Fördermenge des Rohwassers über das Steuermittel 20 eingestellt wird. Hierzu liefert das Steuermittel 20 Steuersignale 23 an die Förderpumpe 2 und ggf. an weitere zur Druck- und/oder Durchflussregelung vorgesehene Vorrichtungen 24, die im Stand der Technik hinlänglich bekannt sind, weshalb diese in der Fig. 1 nicht im Einzelnen dargestellt sind und hier auf eine detaillierte Beschreibung verzichtet wird. Durch die Steuersignale 23 werden der Volumenstrom Q1 in die Wasseraufbereitungsanlage 4 sowie der Druck p1 an der Wasseraufbereitungsanlage 4 eingestellt. Darüber lässt sich auch der Reinwasser-Volumenstrom in den ersten Wasserspeicher 6 steuern und auf einen vorherbestimmten geeigneten Wert einstellen.

Sofern der Füllstand 14 im zweiten Wasserspeicher 11 einen zur Sicherung der Trinkwasserversorgung des Wasserleitungsnetzes 13 kritischen Wert unterschreitet, sendet das Steuermittel 20 ein Steuersignal 25 an die Pumpe 9, wodurch die Pumpe 9 damit beginnt, Reinwasser aus dem ersten Wasserspeicher 6 über die Leitung 8 und die Druckleitung 10 in den zweiten Wasserspeicher 11 zu fördern. Durch das Steuersignal 25 wird die Pumpleistung so eingestellt, dass sich ein definierter Volumenstrom Q2 bzw. ein Druck p2 in der Druckleitung 10 einstellt.

Sobald in dem Wasserverteilungsnetz 13 ein Verbraucher eine Verbrauchsleitung 26 öffnet, wird Wasser aus dem zweiten Wasserspeicher 11 über die Versorgungsleitung 12 zur Verfügung gestellt, wobei das Steuermittel 20 den Volumenstrom Q3 bzw. den Druck p3 in der Versorgungsleitung 12 misst, die mit dem Füllstand 14 in dem zweiten Wasserspeicher 11 korrelieren.

Sobald in dem Stromversorgungssystem 22 die Menge der erzeugten elektrischen Energie die Stromnachfrage übersteigt, sendet das Stromversorgungssystem 22 ein Stromspeicherungsanfragesignal 27 an das Steuermittel 20. Das Steuermittel 20 überprüft dann mithilfe eines von einem in Fig. 1 nicht dargestellten Wasserfüllstandsmessers an das Steuermittel 20 gelieferten Füllstandssignals, ob in dem zweiten Wasserspeicher 11 noch Volumen vorhanden ist, das zur Speicherung von Wasser genutzt werden kann.

Zeigt das Füllstandssignal noch verfügbares Speichervolumen im zweiten Wasserspeicher 11 an, so aktiviert das Steuermittel 20 die Pumpe 9, wodurch die Pumpe 9 damit beginnt, Reinwasser aus dem ersten Wasserspeicher 6 über die Leitung 8 und die Druckleitung 10 in den zweiten Wasserspeicher 11 zu fördern. Zeigt das Füllstandssignal jedoch an, dass im zweiten Wasserspeicher 11 kein Speichervolumen mehr verfügbar ist, so ist trotz Anfrage von dem Stromversorgungssystem 22 die Umwandlung von überschüssiger elektrischer Energie in potentielle Energie nicht möglich und das Steuermittel 20 sendet über die Verbindung 21 ein Signal an das Stromversorgungssystem, um diesem anzuzeigen, dass die Speicherung elektrischer Energie nicht möglich ist.

Sobald in dem Stromversorgungssystem 22 die Menge der erzeugten elektrischen Energie nicht mehr ausreicht, um die Stromnachfrage zu decken, sendet das Stromversorgungssystem 22 ein Stromerzeugungsanfragesignal 27 an das Steuermittel 20. Das Steuermittel 20 überprüft dann anhand verschiedener Daten, ob eine Stromerzeugung über die Turbine 17 mit Generator 19 grundsätzlich möglich ist. Zu diesen Daten können z.B. das Füllstandssignal, der aktuelle Verbrauch in dem Wasserverteilungsnetz 13 oder in einem elektronischen Speicher des Steuermittels 20 gespeicherte typische Trinkwasserverbrauchsdaten (z.B. die Ganglinien des Wasserverbrauchs eines Versorgungsgebiets) gehören, die aus den Trinkwasserverbrauchswerten in der Vergangenheit ermittelt wurden.

Ergibt die durch das Steuermittel 20 durchgeführte Überprüfung, dass eine Stromerzeugung möglich ist, so sendet das Steuermittel 20 an in der Fig. 1 nicht näher dargestellte Vorrichtungen 28 zur Durchfluss- und/oder Druckregelung Steuersignale 29, die dazu führen, dass Trinkwasser mit einem definierten Volumenstrom Q4 bzw. Druck p4 aus dem zweiten Wasserspeicher 11 über einen Abschnitt der Druckleitung 10, die Rückführleitung 16 und über die Turbine 17 in den ersten Wasserspeicher 6 fließt. Die Turbine 17 treibt den Generator 19 an, der über die Verbindungsleitung 30 Strom in das Stromversorgungssystem 22 liefert.

Die Stromerzeugung über die Turbine 17 mit Generator 19 erfolgt dabei entweder solange, bis das Steuermittel 20 zur Sicherung der Trinkwasserversorgung im Wasserverteilungsnetz 13 ein Abbruchsignal sendet, durch das die in der Fig. 1 nicht näher dargestellten Vorrichtungen 28 zur Durchfluss- und/oder Druckregelung so angesteuert werden, dass ein Trinkwasserfluss über die Rückführleitung 16 gestoppt wird. Das Abbruchsignal kann z.B. gesendet werden, wenn der Füllstand 14 in dem zweiten Wasserspeicher 11 einen zur Sicherung der Trinkwasserversorgung kritischen Wert unterschreitet oder wenn aufgrund der Verbrauchsvorhersagen eine akute Trinkwasserverbrauchsspitze in dem Wasserverteilungsnetz 13 zu erwarten ist.

In Abhängigkeit des Abbruchsignals wird von dem Steuermittel 20 ein Signal zum Stromversorgungssystem 22 über die Verbindung 21 gesendet, das anzeigt, dass eine Stromlieferung in das Stromversorgungssystem 22 demnächst nicht mehr möglich ist. Auf alle Fälle muss das Abbruchsignal und damit das Signal zum Stromversorgungssystem 22 so rechtzeitig erfolgen, dass die Stromversorger rechtzeitig vor dem tatsächlichen Abbruch der Stromerzeugung im System auf andere Bezugsquellen umschalten können.

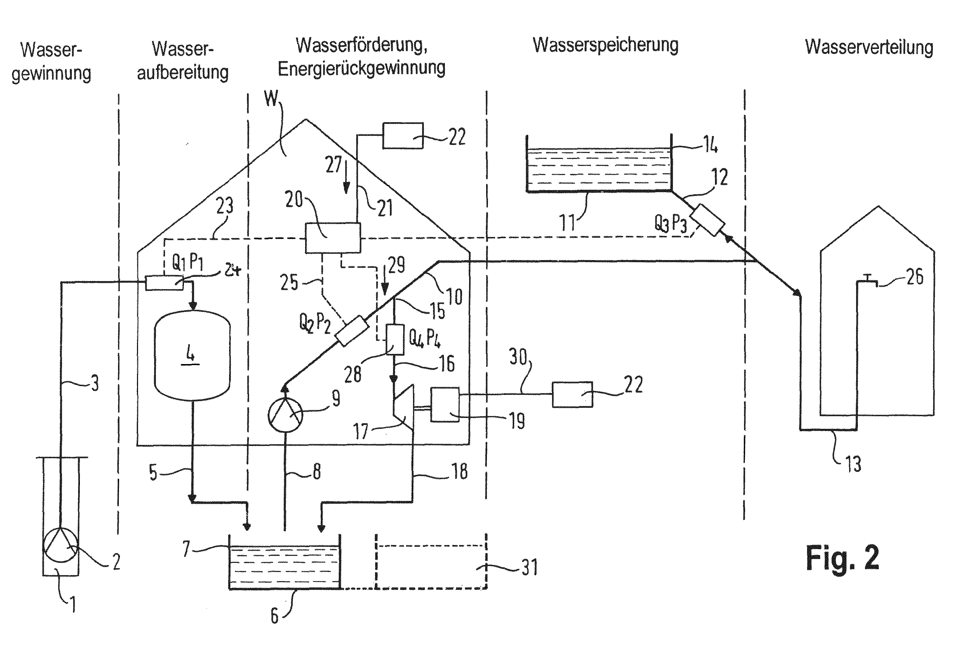

In der Fig. 2 ist schematisch eine zweite Ausführungsform einer Wasserversorgungsanlage gemäß der Erfindung gezeigt. Bei dieser wird der Versorgungsdruck im Wasserverteilungsnetz 13 von der Pumpe 9 und/oder von dem zweiten Wasserspeicher 11 bereitgestellt. Dementsprechend ist der zweite Wasserspeicher 11 als sogenannter Gegenbehälter zum Wasserverteilungsnetz 13 angeordnet und wird über die Druckleitung 10 und die Versorgungsleitung 12 gespeist. Eine Energieerzeugung ist bei dieser Ausführungsform daher nur möglich, wenn der aktuelle Wasserbedarf des Wasserverteilungsnetzes 13 so gering ist, dass er bei abgeschalteter Pumpe 9 von dem zweiten Wasserspeicher 11, in Abhängigkeit des in diesem vorliegenden Füllstands 14, gedeckt werden kann und gleichzeitig aus dem zweiten Wasserspeicher 11 überschüssiges Wasser noch aus dem Wasserverteilungsnetz 13 über die Druckleitung 10 zurück zu der Rückführleitung 16 und zu der Turbine 17 geleitet werden kann, durch die dann elektrische Energie erzeugt wird. Hierbei ist über eine Messung des Durchflusses Q3 bzw. des Drucks p3 regelungstechnisch stets dafür Sorge zu tragen, dass infolge der für die Energieerzeugung notwendigen Rückführung von Wasser aus dem Wasserverteilungsnetz 13 zur Turbine 17 kein unzulässiger Druckabfall in dem Wasserverteilungsnetz 13 erfolgt, der die aktuell angefragte Versorgung mit Trinkwasser gefährden würde.

Bei den Ausführungsformen des erfindungsgemäßen Verfahrens zum Betreiben einer Wasserversorgungsanlage kann während der Energieerzeugung durch die Turbine 17 mit Generator 19 die Pumpe 9 gleichzeitig betrieben werden, um den Wasserdruck auf die Turbine 17 zu erhöhen und auf einen vorherbestimmten Wert einzustellen, da zur Stromerzeugung die Turbine 17 vorzugsweise mit einem konstanten Druck beaufschlagt werden sollte. Ein Zuschalten der Pumpe 9 während der Energieerzeugung durch die Turbine 17 mit Generator 19 kann z.B. auch bei starken akuten Verbrauchsschwankungen im Wasserverteilungsnetz 13 erforderlich sein. Die Steuerung der Zuschaltvorgänge der Pumpe 9 wird dabei vorzugsweise durch das Steuermittel 20 bewirkt.

Eine weitere Ausführungsform der erfindungsgemäßen Wasserversorgungsanlage kann so ausgebildet sein, dass der zweite Wasserspeicher 11 ein Wasservolumen fassen kann, das sowohl für den maximalen Wasserbedarf im Wasserverteilungsnetz 13 als auch für die maximal zu speichernde potentielle Energie ausreichend ist. Diese Lösung eignet sich insbesondere für Neubauten von Trinkwasserversorgungsanlagen, die die Erfindung verwirklichen.

Der zweite Wasserspeicher 11 weist idealerweise eine solche Höhe auf, die an den maximal für das Wasserverteilungsnetz 13 zulässigen Wasserdruck angepasst ist.

Der erste Wasserspeicher 6 kann zusätzlich durch aus einer Wassergewinnung und/oder aus einer Wasseraufbereitungsanlage gefördertes Reinwasser gespeist werden, wobei das Steuermittel 20 darüber hinaus dann so ausgebildet ist, dass es den Volumenstrom des aus der Wassergewinnung und/oder der Wasseraufbereitungsanlage geförderten Wassers so steuern kann, dass eine ausreichende Reinwasserversorgung gesichert wird und überdies eine Energiespeicherungs- und Energieerzeugungsfunktion der Wasserversorgungsanlage ermöglicht wird.

Bei einer weiteren bevorzugten Ausführungsform der erfindungsgemäßen Wasserversorgungsanlage kann das aus dem Brunnen 1 über die Pumpe 2 geförderte Rohwasser bereits Trinkwasserqualität aufweisen, so dass die Wasseraufbereitungsanlage 4 entfällt und das Rohwasser direkt über die Leitung 3 in den ersten Wasserspeicher 6 geleitet wird.

Bei einer weiteren bevorzugten Ausführungsform der erfindungsgemäßen Wasserversorgungsanlage kann das Steuermittel 20 kontinuierlich auf Informationen über die zeitlich aktuellen Strompreise zugreifen, so dass die Energiespeicherungs- und/oder Energieversorgungsfunktion der Wasserversorgungsanlage aus betriebswirtschaftlicher Sicht optimiert werden kann. Hierdurch lässt sich dann möglicherweise ein nicht unerheblicher Ertrag erzielen. Dabei ist zu berücksichtigen, dass die Preise für Strom sogar während eines Tages stark schwanken können.

Die Begriffe Pumpe und Turbine sind in dieser Beschreibung so zu verstehen, dass auch eine Kombination der beiden Elemente in Form einer Pumpturbine, die in der Strömungsrichtung der Druckleitung 10 als Pumpe und in der umgekehrten Strömungsrichtung während der Energieerzeugung als Turbine wirkt, verwendet werden kann. Des Weiteren kann durchflussabhängig, insbesondere bei geringen Durchflussraten, auch eine rückwärtslaufende Kreiselpumpe als Turbine zum Einsatz kommen. Die Pumpe 9 selbst wird vorzugsweise elektrisch betrieben.

Gemäß einer weiteren Ausführungsform der Erfindung kann die Wasserversorgungsanlage auch Wasser liefern, das keine Trinkwasserqualität aufweist. So werden die Verbraucher in vielen Ländern mit verschiedenen Wassersorten beliefert, die jeweils unterschiedlicher Qualität aufweisen und für unterschiedliche Zwecke verwendet werden können. Z.B. ist das in Spanien der Fall, wo es von der Trinkwasserversorgung getrennte Brauchwassernetze gibt.

Sofern die Erfindung aber in Verbindung mit der Trinkwasserversorgung eingesetzt wird, sind die beiden Wasserspeicher 6, 11 vorzugsweise geschlossen, um Verunreinigungen des Trinkwassers durch Laub etc. zu verhindern. Darüber hinaus müssen die Baustoffe der Wasserspeicher 6, 11 so gewählt werden, dass bei der Wasserspeicherung keine Kontamination des Trinkwassers erfolgt.

Das gilt auch für die weiteren Elemente der Trinkwasserversorgungsanlage wie die Pumpe 9, die Turbine 17 und die Leitungen 8, 10, 12, 16, 18. Auch diese müssen aus Materialien gefertigt sein, die eine Kontamination des Trinkwassers verhindern.

Der zweite Wasserbehälter 11 muss nicht notwendigerweise aus einem Hochbehälter bestehen, sondern kann z.B. auch aus einem Wasserturm bestehen, der speziell gemäß den Anforderungen der Wasserversorgungsanlage konstruiert wurde.

Bei weiteren Ausführungsformen der Erfindung kann der zweite Wasserbehälter 11 räumlich an verschiedenen Positionen relativ zum Wasserverteilungsnetz 13 angeordnet sein, z.B. kann er als Zentralbehälter von dem Wasserverteilungsnetz 13 umgeben sein oder sogenannter Gegenbehälter hinter dem Wasserverteilungsnetz 13 liegen. In dem in der Fig. 1 dargestellten Ausführungsbeispiel ist der zweite Wasserbehälter 11 vor dem Wasserverteilungsnetz 13 als sogenannter Durchlaufbehälter ausgebildet, während bei dem in der Fig. 2 dargestellten Ausführungsbeispiel dieser als Zentral- oder Gegenbehälter ausgebildet sein kann.

Es ist auch möglich, dass der erste Wasserspeicher 6 ein Tiefbehälter einer Trinkwasserversorgungsanlage und der zweite Wasserspeicher 11 ein Hochbehälter einer Trinkwasserversorgungsanlage in einem Versorgungsgebiet sind und zumindest ein Erweiterungsspeicher 31 für den ersten Wasserspeicher 6 vorgesehen ist, wobei die Summe der Aufnahmevolumen des ersten Wasserspeichers 6 und des zumindest einen Erweiterungsspeichers 31 annähernd dem Aufnahmevolumen des zweiten Wasserspeichers 11 entspricht.

Des Weiteren ist es auch denkbar, dass eine Kaskade von mehreren, höher gelegenen Wasserspeichern für die Wasserversorgungsanlage genutzt wird, die jeweils miteinander in Verbindung stehen. Solche unterschiedlichen Wasserspeicher kommen in Gebieten zum Einsatz, in denen auch Versorgungsgebiete unterschiedlich hoch liegen und daher der Versorgungsdruck für ein spezifisches Versorgungsgebiet jeweils von dem diesem zugehörigen, in einer entsprechenden Höhe angeordneten Wasserspeicher zur Verfügung gestellt werden muss. Zwischen diesen einzelnen, jeweils unterschiedliche Druckzonen bereitstellenden Wasserspeichern lässt sich dann jeweils das erfindungsgemäße Prinzip zur Anwendung bringen, indem entsprechend dimensionierte Turbinen zwischen den in unterschiedlichen Höhenlagen angeordneten Wasserspeichern angeordnet werden.

Die von dem Steuermittel 20 durchgeführten Steuerschritte lassen sich sowohl in Hardware als auch in Software implementieren, wobei im letzteren Fall das Steuermittel 20 einen Prozessor sowie einen Speicher aufweist, auf dem die Verfahrensschritte in Form eines Computerprogramms gespeichert sind.

Ferner kann das erfindungsgemäße Verfahren auch bei einem Verfahren zur Wasserversorgung mit mehreren Wasserversorgungsanlagen und zur Versorgung mit elektrischer Energie mit einem Stromversorgungssystem eingesetzt werden, bei dem die Wasserversorgungsanlagen jeweils nach einem der oben beschriebenen erfindungsgemäßen Verfahren zum Betreiben einer Wasserversorgungsanlage betrieben werden und die Wasserversorgungsanlagen bei Energiespeicherbedarf des Stromversorgungssystems sukzessive daraufhin überprüft werden, ob in der jeweiligen Wasserversorgungsanlage eine Speicherung von elektrischer Energie durch Hochpumpen von Wasser möglich ist, und dann, wenn eine Wasserversorgungsanlage gefunden wurde, bei der ein Hochpumpen möglich ist, der Hochpumpvorgang initiiert wird, so dass elektrische Energie aus dem Stromversorgungssystem in potentielle Energie umgewandelt werden kann, wobei der Vorgang der Überprüfung über alle Wasserversorgungsanlagen hin solange fortgesetzt wird, bis der Energiespeicherbedarf des Stromversorgungssystems gedeckt ist oder eine weitere Speicherung nicht mehr möglich ist.

Auch dieses Verfahren zur Wasserversorgung mit mehreren Wasserversorgungsanlagen und zur Versorgung mit elektrischer Energie mit einem Stromversorgungssystem lässt sich in Form eines Computerprogramms implementieren, das mittels eines Prozessors ausgeführt werden kann.

Die Erfindung eignet sich insbesondere zur Nachrüstung bestehender Wasserversorgungsanlagen in einem Versorgungsgebiet. Da bei bereits bestehenden Anlagen der obere Wasserspeicher in der Regel für einen Tagesbedarf und der untere Wasserspeicher für einen Stundenbedarf ausgelegt sind, kann es gegebenenfalls im Bereich des unteren Wasserspeichers notwendig werden, zur Erweiterung zusätzliche Wasserspeicher 31 vorzusehen, die bei einer möglichen Energieerzeugung das Wasser aus dem oberen Wasserspeicher vollständig aufzunehmen vermögen. Beim Neubau einer erfindungsgemäßen Anlage können die geforderten Dimensionierungen der Wasserspeicher bereits im Vorfeld berücksichtigt werden.

Die Vorrichtungen zur Erzeugung der elektrischen Energie, wie die Turbine 17, der Generator 19 mit den entsprechenden Leitungen sowie gegebenenfalls das Steuermittel 20 können vorzugsweise innerhalb eines Wasserwerks W für ein Versorgungsgebiet integriert bzw. nachgerüstet werden.

## Patentansprüche

1. Wasserversorgungsanlage mit
- einem ersten Wasserspeicher (6),
- einem zweiten Wasserspeicher (11), der höher gelegen ist als der erste Wasserspeicher (6),
- einem mit dem zweiten Wasserspeicher (11) verbundenen Wasserverteilungsnetz (13),
- einer Pumpe (9), die so ausgebildet ist, dass sie den zweiten Wasserspeicher (11) mit Wasser speisen kann,
- einer Turbine (17) mit Generator (19),
- einer Druckleitung (10) zum Leiten von aus dem ersten Wasserspeicher (6) stammendem Wasser, das von der Pumpe (9) zum zweiten Wasserspeicher (11) gefördert wird,
- einer Rückführleitung (16,18) zum Leiten von aus dem zweiten Wasserspeicher (11) stammendem Wasser über die Turbine (17) in den ersten Wasserspeicher (6), und
- einem Steuermittel (20), das so ausgebildet ist, dass es die Wasserversorgungsanlage unter Sicherstellung des in dem Wasserverteilungsnetz (13) bestehenden Wasserbedarfs so steuern kann, dass zusätzlich bedarfsabhängig eine Energiespeicherungsfunktion durch Hochpumpen von Wasser in den zweiten Wasserspeicher (11) und/oder eine Energieversorgungsfunktion durch Betreiben der Turbine (17) mit Generator (19) erfüllt wird.

2. Wasserversorgungsanlage nach Anspruch 1, bei der das Steuermittel (20) so ausgebildet ist, dass es ein erstes Signal von einem Stromversorgungssystem (22) empfangen kann, das einen Energiespeicherbedarf in dem Stromversorgungssystem (22) anzeigt, wobei das Steuermittel (20) als Reaktion eine Überprüfung dahingehend durchführt, ob in der Wasserversorgungsanlage eine Speicherung von elektrischer Energie durch Hochpumpen von Wasser aus dem ersten Wasserspeicher (6) in den zweiten Wasserspeicher (11) möglich ist, und dann, wenn die Überprüfung ergibt, dass ein Hochpumpen möglich ist, ein Steuersignal an die Pumpe (9) sendet, durch das der Hochpumpvorgang initiiert wird, so dass elektrische Energie aus dem Stromversorgungssystem (22) in potentielle Energie umgewandelt werden kann.

3. Wasserversorgungsanlage nach Anspruch 1 oder 2, bei der das Steuermittel (20) so ausgebildet ist, dass es ein zweites Signal von einem Stromversorgungssystem (22) empfangen kann, das einen Energiebedarf in dem Stromversorgungssystem (22) anzeigt, wobei das Steuermittel (20) als Reaktion eine Überprüfung dahingehend durchführt, ob ohne Gefährdung der Wasserversorgung in dem Wasserverteilungsnetz (13) eine Erzeugung von elektrischer Energie durch Betreiben der Turbine (17) mit Generator (19) durch Ableiten von Wasser aus dem zweiten Wasserspeicher (11) in den ersten Wasserspeicher (6) möglich ist, und dann, wenn die Überprüfung ergibt, dass Energieerzeugung möglich ist, die Turbine (17) aktiviert, so dass potentielle Energie in elektrische Energie umgewandelt und in das Stromversorgungssystem (22) geliefert werden kann.

4. Wasserversorgungsanlage nach einem der Ansprüche 1 bis 3, bei der das Wasser Trinkwasserqualität aufweist.

5. Wasserversorgungsanlage nach Anspruch 4, bei der die Elemente Wasserspeicher (6;11), Leitungen (5;8;10;12;16,18), Pumpe (9) und Turbine (17) so ausgebildet sind, dass die für den menschlichen Gebrauch erforderliche Qualität des Trinkwassers beim Kontakt des Wassers mit diesen Elementen nicht beeinträchtigt wird.

6. Verfahren zum Betreiben einer Wasserversorgungsanlage, bei dem
- aus einem ersten Wasserspeicher (6) in einen gegenüber dem ersten Wasserspeicher (6) höher gelegenen zweiten Wasserspeicher (11) Wasser mittels einer Pumpe (9) gefördert wird, um einen ausreichenden Wasservorrat für die Versorgung in einem Wasserverteilungsnetz (13) zu bilden und/oder von einem Stromversorgungssystem (22) gelieferte elektrische Energie in potentielle Energie umzuwandeln,
- in Abhängigkeit von dem Wasserbedarf in dem Wasserverteilungsnetz (13) Wasser aus dem zweiten Wasserspeicher (11) in das Wasserverteilungsnetz (13) eingespeist wird, und
- in Abhängigkeit von dem Strombedarf in dem Stromversorgungssystem (22) dann, wenn dadurch die Wasserversorgung in dem Wasserverteilungsnetz (13) nicht beeinträchtigt wird, potentielle Energie durch Ableiten von Wasser aus dem zweiten Wasserspeicher (11) über eine Turbine (17) mit Generator (19) in den ersten Wasserspeicher (6) in elektrische Energie umgewandelt wird, die in das Stromversorgungssystem (22) geliefert wird.

7. Verfahren nach Anspruch 6, bei dem darüber hinaus dann, wenn ein Energiespeicherbedarf in dem Stromversorgungssystem (22) besteht, überprüft wird, ob in der Wasserversorgungsanlage eine Speicherung von elektrischer Energie durch Hochpumpen von Wasser aus dem ersten Wasserspeicher (6) in den zweiten Wasserspeicher (11) möglich ist, und dann, wenn die Überprüfung ergibt, dass ein Hochpumpen möglich ist, der Hochpumpvorgang initiiert wird, so dass elektrische Energie aus dem Stromversorgungssystem (22) in potentielle Energie umgewandelt werden kann.

8. Verfahren nach Anspruch 6 oder 7, bei dem darüber hinaus dann, wenn ein Energiebedarf in dem Stromversorgungssystem (22) besteht, überprüft wird, ob ohne Gefährdung der Wasserversorgung in dem Wasserverteilungsnetz (13) elektrische Energie durch Betreiben der Turbine (17) mit Generator (19) durch Ableiten von Wasser aus dem zweiten Wasserspeicher (11) in den ersten Wasserspeicher (6) erzeugt werden kann, und dann, wenn die Überprüfung ergibt, dass eine Energieerzeugung möglich ist, die Turbine (17) aktiviert wird, so dass potentielle Energie in elektrische Energie umgewandelt und in das Stromversorgungssystem (22) geliefert werden kann.

9. Verfahren nach einem der Ansprüche 6 bis 8, bei dem die Funktionen der Energiespeicherung und/oder Energieversorgung der Wasserversorgungsanlage unter Berücksichtigung der jeweiligen Marktpreise für den benötigten Pumpenstrom bzw. den erzeugten Generatorstrom optimiert werden.

10. Verfahren nach einem der Ansprüche 6 bis 9, bei dem das Wasser Trinkwasserqualität aufweist.

11. Computerlesbares Medium, auf dem Befehle gespeichert sind, die so ausgebildet sind, dass sie einen Prozessor dazu bringen können, die Schritte des Verfahrens nach Anspruch 7 auszuführen.

12. Computerlesbares Medium, auf dem Befehle gespeichert sind, die so ausgebildet sind, dass sie einen Prozessor dazu bringen können, die Schritte des Verfahrens nach Anspruch 8 auszuführen.

13. Computerlesbares Medium, auf dem Befehle gespeichert sind, die so ausgebildet sind, dass sie einen Prozessor dazu bringen können, die Schritte des Verfahrens nach Anspruch 7 und die Schritte des Verfahrens nach Anspruch 8 auszuführen.

14. Verfahren zur Wasserversorgung mit mehreren Wasserversorgungsanlagen und zur Versorgung mit elektrischer Energie mit einem Stromversorgungssystem (22), bei dem die Wasserversorgungsanlagen jeweils nach einem der Verfahren der Ansprüche 6 bis 10 betrieben werden und die Wasserversorgungsanlagen bei Energiespeicherbedarf des Stromversorgungssystems (22) sukzessive daraufhin überprüft werden, ob in der jeweiligen Wasserversorgungsanlage eine Speicherung von elektrischer Energie durch Hochpumpen von Wasser möglich ist, und dann, wenn eine Wasserversorgungsanlage gefunden wurde, bei der ein Hochpumpen möglich ist, der Hochpumpvorgang initiiert wird, so dass elektrische Energie aus dem Stromversorgungssystem (22) in potentielle Energie umgewandelt werden kann, wobei der Vorgang der Überprüfung über alle Wasserversorgungsanlagen hin solange fortgesetzt wird, bis der Energiespeicherbedarf des Stromversorgungssystems (22) gedeckt ist oder eine weitere Speicherung nicht mehr möglich ist.

15. Computerlesbares Medium, auf dem Befehle gespeichert sind, die so ausgebildet sind, dass sie einen Prozessor dazu bringen können, die Schritte des Verfahrens nach Anspruch 14 auszuführen.
